Europäisches Patentamt

European Patent Office

Office européen des brevets

(19)

(11) Veröffentlichungsnummer: **0 374 810**

**A1**

(12) **EUROPÄISCHE PATENTANMELDUNG**

(21) Anmeldenummer: 89123417.1

(22) Anmeldetag: **19.12.89**

(51) Int. Cl.5: **C08K 5/01, C08L 25/06, C08J 9/00**

(30) Priorität: **23.12.88 DE 3843537**

(43) Veröffentlichungstag der Anmeldung:
**27.06.90 Patentblatt 90/26**

(84) Benannte Vertragsstaaten:
**AT BE DE ES FR GB IT NL**

(71) Anmelder: **BASF Aktiengesellschaft
Carl-Bosch-Strasse 38
D-6700 Ludwigshafen(DE)**

(72) Erfinder: **Weber, Reinhold
An der Steinernen Brücke 11
D-6704 Mutterstadt(DE)**
Erfinder: **Hahn, Klaus, Dr.
Im Bügen 9
D-6719 Kirchheim(DE)**
Erfinder: **Guhr, Uwe, Dr.
Beim Hochgericht 9
D-6718 Grünstadt(DE)**
Erfinder: **De Grave, Isidoor, Dr.
Mandelring 3
D-6706 Wachenheim(DE)**
Erfinder: **Naarmann, Herbert, Dr.
Haardtblick 15
D-6719 Wattenheim(DE)**
Erfinder: **Alicke, Gerhard
Brunnerstrasse 11
D-6520 Worms 1(DE)**
Erfinder: **Weilbacher, Manfred, Dr.
Taunusstrasse 27
D-6710 Frankenthal(DE)**

(54) **Extrudierte Styrolpolymerisat-Schaumstoffplatten.**

(57) Extrudierte Styrolpolymerisat-Schaumstoffplatten der Dichte von 20 bis 60 kg/m³, die 0,05 bis 0,5 Gew.-% 2,3-Diphenyl-2,3-dimethylbutan enthalten, zeichnen sich durch erhöhte Druckfestigkeit und erhöhte Wärmeformbeständigkeit aus.

EP 0 374 810 A1

EP 0 374 810 A1

## Extrudierte Styrolpolymerisat-Schaumstoffplatten

Gegenstand der Erfindung sind extrudierte Schaumstoffplatten auf Basis von Styrolpolymerisaten, die sich durch hohe Druckfestigkeit und hohe Wärmeformbeständigkeit auszeichnen.

Der Erfindung liegt die Aufgabe zugrunde, Styrolpolymerisat-Schaumstoffplatten, die durch Extrusion hergestellt werden, in ihrer Druckfestigkeit und Wärmeformbeständigkeit zu verbessern. Darüber hinaus bestand die Aufgabe, bei der Herstellung der Platten die Leistungsaufnahme und die Korrosion des Extruders zu vermindern, die Menge der für die Herstellung von selbstverlöschenden Schaumstoffplatten benötigten Flammschutzmittel zu verringern, das Raumgewicht der Platten zu verringern und die Zellzahl zu erhöhen.

Überraschenderweise wurde nun gefunden, daß diese vielseitigen Aufgaben sämtlich gelöst werden durch die Mitverwendung von geringen Mengen von 2,3-Diphenyl-2,3-dimethylbutan.

Gegenstand der Erfindung sind somit extrudierte Styrolpolymerisat-Schaumstoffplatten mit hoher Druckfestigkeit und einer Dichte von 20 bis 60 kg/m$^3$, enthaltend 0,05 bis 0,5 Gew.-% 2,3-Diphenyl-2,3-dimethylbutan.

Aus der US-PS 3 441 524 sind selbstverlöschende Styrolpolymerisate bekannt, die organische Bromverbindungen und substituierte Diphenylethane enthalten. Diese Literatur vermittelt jedoch keine Lehre für die Verbesserung der Eigenschaften von extrudierten Styrolpolymerisat-Schaumstoffplatten.

Styrolpolymerisat-Schaumstoffplatten werden in an sich bekannter Weise hergestellt durch Extrusion eines Gemisches aus einem Styrolpolymerisat, einem Treibmittel sowie ggf. üblichen Zusatzstoffen. In einem Extruder wird das durch Erwärmen plastifizierte Styrolpolymerisat mit dem Treibmittel und den Zusatzstoffen innig vermischt. Das Gemisch durchläuft sodann eine Beruhigungszone, in der es unter ständigem Rühren auf eine Temperatur zwischen etwa 100 und 120°C gekühlt und anschließend durch eine Düse unter Aufschäumen zu Platten extrudiert wird.

Die Schaumstoffplatten weisen in der Praxis einen Querschnitt von mindestens 50 cm$^2$, vorzugsweise 100 bis etwa 1000 cm$^2$ auf. Die Dicke der Platten kann bis zu 200 mm und die Breite bis zu 1300 mm betragen.

Die erfindungsgemäßen Platten haben eine Dichte von 20 bis 60 kg/m$^3$, vorzugsweise 25 bis 40 kg/m$^3$.

Die Platten haben im allgemeinen eine Wärmeleitzahl ($\lambda$-Wert) zwischen 0,022 und 0,036 W/mK, vorzugsweise zwischen 0,026 und 0,032 W/mK, eine Druckfestigkeit zwischen 0,1 und 0,6 N/mm$^2$, insbesondere zwischen 0,25 und 0,45 N/mm$^2$, eine Wasseraufnahme von weniger als 0,5, insbesondere weniger als 0,2 Vol.-% und eine hohe Dimensionsstabilität und hohe Wärmeformbeständigkeit.

Die Platten besitzen eine Schäumhaut und im allgemeinen mehr als 90 %, insbesondere mehr als 96 % geschlossene Zellen. Die Zellgröße liegt im allgemeinen zwischen 0,1 und 0,5 mm, vorzugsweise zwischen 0,1 und 0,3 mm.

Styrolpolymerisate im Sinne dieser Erfindung sind Polystyrol und Mischpolymerisate des Styrols, die mindestens 50 Gew.-% Styrol einpolymerisiert enthalten. Als Comonomere kommen z.B. in Betracht α-Methylstyrol, kernhalogenierte Styrole, kernalkylierte Styrole, Acrylnitril, Ester der (Meth)acrylsäure von Alkoholen mit 1 bis 8 C-Atomen, N-Vinylverbindungen, wie Vinylcarbazol, Maleinsäureanhydrid oder auch geringe Mengen an Verbindungen, die zwei polymerisierbare Doppelbindungen enthalten, wie Butadien, Divinylbenzol oder Butandioldiacrylat.

Als Treibmittel werden die üblichen physikalischen Treibmittel verwendet, die Styrolpolymerisate nicht lösen, jedoch in der Styrolpolymerisatschmelze unter Druck löslich sind. Geeignet sind beispielsweise $C_3$-$C_5$-Kohlenwasserstoffe, wie Propan, n-Butan, n-Pentan, i-Pentan, Neopentan und deren Gemische, Chlorkohlenwasserstoffe, wie Methylchlorid und/oder Ethylchlorid, Fluorchlorkohlenwasserstoffe, wie Dichlordifluormethan und/oder 1,1-Difluor-1-chlorethan sowie Kohlendioxid. Vorzugsweise werden als Treibmittel Gemische der genannten Verbindungen verwendet. Die optimale Zusammensetzung der Gemische läßt sich leicht durch Vorversuche ermitteln. Das Treibmittel wird im allgemeinen in Mengen zwischen 7 und 16 Gew.-% bezogen auf das Styrolpolymerisat, verwendet.

Erfindungswesentlich ist die Mitverwendung von 2,3-Diphenyl-2,3-dimethylbutan in einer Menge von 0,05 bis 0,5 Gew.-%, vorzugsweise 0,1 bis 0,3 Gew.-%. der Zusatzstoff liegt im Styrolpolymerisat in gelöster bzw. homogen verteilter Form vor.

Als übliche Zusatzstoffe können dem Styrolpolymerisat ein Treibmittelgemisch, Antistatika, Stabilisatoren, Farbstoff, Schmiermittel, Füllstoffe, Keimbildner und/oder Flammschutzmittel in üblichen Mengen zugesetzt werden.

Als Flammschutzmittel werden vorzugsweise organische Bromverbindungen eingesetzt, die mindestens 2 Bromatome und einen Bromgehalt von mindestens 40 Gew.-% aufweisen. Geeignete Bromverbindungen sind 1,2,3,4-Tetrabrombutan, Tetrabrompentan, Tribrombutan, 1-Chlor-2,3,4,5,6-pentabromcyclohexan, Hexabromcyclohexan, Hexabromcyclododecan, Octabromcyclohexadecan, Dibromethylbenzol, Pentabromdiphenylether, Ester und Acetale des Dibrompropenols, wie Tris-(2,3-dibrompropyl)phosphat. Bevorzugt wird 1,2,5,6,9,10-Hexabromcyclododecan verwendet. Die Schaumstoffe enthalten die Bromverbindung im allgemeinen in einer solchen Menge, daß der Bromgehalt, bezogen auf das Styrolpolymerisat zwischen 0,3 und 3 Gew.-%, vorzugsweise 0,3 bis 2 Gew.-%, insbesondere 0,3 bis 1 Gew.-%, liegt. Im Vergleich zu entsprechenden Schaumstofen ohne 2,3-Diphenyl-2,3-diethyl butan ist zur Erzielung der gleichen Flammschutzwirkung nur weniger als die Hälfte an Bromverbindung erforderlich. Durch Verhinderung des Gehalts an Bromverbindung wird die Korrosion und Abrasion der Extruderschnecken drastisch vermindert.

Die in den Beispielen genannten Teile sind Gewichtsteile.

Beispiel 1 (Vergleich)

100 Teile Polystyrol mit einem Schmelzindex von 4,5, 0,1 Teile Talkum als Keimbildner zur Regelung der Zellgröße und 1,7 Teile Hexabromcyclododecan werden einem Extruder mit einem inneren Schneckendurchmesser von 120 mm kontinuierlich zugeführt. Durch eine in den Extruder angebrachte Einlaßöffnung wurde gleichzeitig ein Treibmittelgemisch aus 1,9 Teilen Ethylchlorid und 14 Teilen Dichlordifluormethan kontinuierlich ein gedrückt. Das in dem Extruder gleichmäßig geknetete Gel wurde durch eine Beruhigungszone geführt und nach einer Verweilzeit von 15 Minuten mit einer Austrittstemperatur von 105° C durch eine 300 mm breite und 1,5 mm weite Düse in die Atmosphäre extrudiert. Der Schaum wurde durch einen mit dem Extruder verbundenen Formkanal geführt, wobei eine geschäumte Polystyrolplattenbahn mit einem Querschnitt von 650 x 50 mm entstand.

Das geschäumte Produkt wurde in Platten von 600 x 50 x 1250 mm geschnitten. Geprüft wurden die Proben nach einer Ablagerungszeit von 30 Tagen, der λ-Wert wurde aus Messungen nach 30 und 60 Tagen auf eine 2-jährige Lagerzeit extrapoliert. Gemessen wurde der λ-Wert (Wärmeleitzahl) nach DIN 52612, die Schaumstoffdichte nach DIN 53420, die Zellgröße nach ASTM D 3842-69, die Geschlossenzelligkeit nach DIN-ISO 4590, die Wasseraufnahme aus ganzen Platten nach DIN 53434, die Druckspannung nach DIN 53421 und die Wärmeformbeständigkeit nach DIN 53431.

Zur Bestimmung der Nachbrennzeit wurde folgender Flammtest durchgeführt: Eine 20 mm dicke Plattenprobe, die aus der Mitte der zu prüfenden Platte geschnitten ist, wurde an der Längsseite 10 mal mit einer 5 cm langen Propanflamme beflammt. Die bis zum Erlöschen gemessenen Nachbrennzeiten dieser 10 Tests wurden gemittelt. Dieser Wert gilt als Nachbrennzeit.

Beispiel 2

Es wurde wie in Beispiel 1 gearbeitet, jedoch statt 1,7 Teilen nur 0,76 Teile Hexabromcyclododecan, und zusätzlich 0,15 Teile 2,3-Diphenyl-2,3-dimethylbutan eingesetzt.

Beipiel 3

Es wurde wie in Beispiel 1 gearbeitet, jedoch statt 1,7 Teilen jetzt 1,5 Teile Hexabromcyclododecan und zusätzlich 0,05 Teile 2,3-Diphenyl-2,3-dimethylbutan eingesetzt.

Beispiel 4

Es wurde wie in Beispiel 1 gearbeitet, jedoch statt 1,7 Teilen nun 0,5 Teile Hexabromcyclododecan und zusätzlich 0,5 Teile 2,3-Diphenyl-2,3-dimethylbutan eingesetzt.

Die erzielten Ergebnisse sind in der Tabelle zusammengefaßt.

EP 0 374 810 A1

Tabelle

| Beispiel | Geschlossenzelligkeit % | Wasseraufname V % | Dichte kg/m³ | Nachbrennzeit sec | Druckspannung N/mm² | | | Zellzahl Z/mm | | | Wärmeformbest. 85°C | | |
|---|---|---|---|---|---|---|---|---|---|---|---|---|---|
| | | | | | s-Richtung | l-Richtung | q-Richttung | s-Richtung | l-Richtung | q-Richttung | s-Richtung | l-Richtung | q-Richtung |
| 1 | 98,2 | 0,58 | 33,5 | 2,8 | 0,317 | 0,264 | 0,201 | 10 | 11 | 11 | +2,3 | +5,2 | +6,1 |
| 2 | 98,6 | 0,43 | 32,5 | 1,5 | 0,408 | 0,245 | 0,215 | 11,5 | 12,2 | 12,3 | +2,2 | +4,2 | +4,1 |
| 3 | 98,5 | 0,45 | 33,1 | 2,1 | 0,332 | 0,248 | 0,206 | 10,5 | 11,0 | 11,5 | +2,0 | +4,6 | +5,0 |
| 4 | 98,4 | 0,48 | 32,8 | 1,7 | 0,389 | 0,252 | 0,209 | 12,1 | 13,2 | 12,8 | +2,3 | +4,25 | +4,15 |

**Ansprüche**

1. Extrudierte Styrolpolymerisat-Schaumstoffplatten mit hoher Druckfestigkeit und einer Dichte von 20 bis 60 kg/m$^3$, enthaltend 0,05 bis 0,5 Gew.-% 2,3-Diphenyl-2,3-dimethylbutan.

2. Extrudierte Styrolpolymerisat-Schaumstoffplatten gemäß Anspruch 1, enthaltend eine organische Bromverbindung mit mindestens 2 Bromatomen und einem Bromgehalt von mindestens 40 Gew.-% in einer solchen Menge, daß der Bromgehalt, bezogen auf das Styrolpolymerisat 0,3 bis 3 Gew.-% beträgt.

3. Extrudierte Styrolpolymerisat-Schaumstoffplatten gemäß Anspruch 1, enthaltend als Bromverbindung 1,2,5,6,9,10-Hexabromcyclododecan.

| | Europäisches Patentamt | **EUROPÄISCHER RECHERCHENBERICHT** | Nummer der Anmeldung EP 89 12 3417 |

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | US-A-3 420 786  (H. WEBER et al.)<br>* Ansprüche; Beispiel 3 *<br>--- | 1-3 | C 08 K    5/01<br>C 08 L   25/06<br>C 08 J    9/00 |
| X | DE-A-2 603 509  (BASF)<br>* Ansprüche 1-2; Seite 4, Zeilen 14-15;<br>Seite 11, Beispiel 27 *<br>----- | 1-3 | |

**RECHERCHIERTE SACHGEBIETE (Int. Cl.5)**

C 08 J
C 08 K
C 08 L

Der vorliegende Recherchenbericht wurde für alle Patentansprüche erstellt

| Recherchenort | Abschlußdatum der Recherche | Prüfer |
|---|---|---|
| DEN HAAG | 30-03-1990 | HOFFMANN K.W. |